# EUROPEAN PATENT APPLICATION

(11) **EP 4 447 155 A1**
(43) Date of publication of application: **16.10.2024**
(21) Application number: 22904722.0
(22) Date of filing: 09.12.2022
(51) Int. Cl.: H01M 4/36, H01M 4/587, H01M 10/0525, C01B 32/05, H01M 4/02

(54) **FAST-CHARGING ANODE MATERIAL FOR LITHIUM SECONDARY BATTERY, AND PREPARING METHOD OF LITHIUM SECONDARY BATTERY COMPRISING SAME**

(30) Priority: 10.12.2021 KR 20210176507
(71) Applicant: Posco Future M Co., Ltd, Pohang-si, Gyeongsangbuk-do 37918 (KR)
(72) Inventor: JUNG, Myung Sun, Cheonan-si Chungcheongnam-do 31187 (KR); LEE, Heon Young, Cheonan-si, Chungcheongnam-do 31185 (KR); CHOI, Hyun Ki, Cheongju-si, Jeollabuk-do 28121 (KR); KIM, Dae Sik, Cheonan-si, Chungcheongnam-do 31104 (KR); KWON, Ki Min, Cheonan-si, Chungcheongnam-do 31120 (KR); PARK, Hyeonggu, Busan 46595 (KR); LEE, Jae Hyeon, Cheonan-si, Chungcheongnam-do 31198 (KR)
(74) Representative: Meissner Bolte Partnerschaft mbB
(86) International application number: PCT/KR2022/020059
(87) International publication number: WO 2023/106893

(57) **Abstract**

One embodiment provides a negative active material for lithium secondary battery, comprising:
a first coke with a Total Fibrosity Index (TFI) of 0.70 to 0.85 and a second coke with a Total Fibrosity Index (TFI) of 0.01 to 0.60 at a weight ratio of 4:1 to 50:1, and wherein, a lithium secondary battery containing the negative active material has an average voltage value of -0.16 V or more at the 40% of SOC (State of Charge), based on the entire battery charge capacity of 100%. Lithium secondary batteries containing the negative active material have excellent charge/discharge and rate characteristics.

## Description

### Field of the Invention

This relates to a rapid charge type negative active material for lithium secondary batteries and a manufacturing method for lithium secondary batteries including the same.

### Description of the Related Art

Recently, high-capacity batteries are progressing due to the increase in power consumption due to higher performance and function integration of portable electronic devices such as portable phones and tablet PCs.

High power sources are needed for power tools, particularly HEVs (hybrid vehicles) and EVs (electric vehicles), and accordingly, the need for rechargeable batteries with excellent high-power characteristics and discharge speeds is greatly increasing. Additionally, as usage time increases, the charge/discharge cycle of the battery decreases, requiring a significant improvement in battery cycle.

In addition, minimizing battery volume changes (expansion and contraction) due to degradation of battery materials is emerging as a major necessary characteristic. Among secondary batteries, lithium secondary batteries are widely used due to their merits such as a high energy density and high voltage.

Commercial lithium secondary batteries generally use metal oxide-based positive active materials and carbon-based negative active materials such as graphite.

Graphite as a negative active material, is classified into a natural graphite mined, processed through physical selection and high purification, and an artificial graphite obtained by processing and high-temperature heat treatment of coke obtained by heat treatment of organic substances such as coal or petroleum residue.

In general, to manufacture artificial graphite negative electrode materials, pitch, which is a coal or petroleum-based residue or processed product, can be used through carbonization and high temperature heat treatment (graphitization) processes.

Depending on the application purpose, a composite negative electrode material made of a mixture of a natural graphite and an artificial graphite or a composite material mixed with heterogeneous coke graphite may be used to compensate for the drawbacks of both materials.

### SUMMARY OF THE INVENTION

One embodiment provides a negative active material that has excellent charge and discharge characteristics and is effective in improving the rate characteristics of a lithium secondary battery.

Another embodiment provides a manufacturing method of the negative active material.

Another embodiment provides a lithium secondary battery with improved charge and discharge characteristics and rate characteristics by employing a negative electrode containing the negative active material.

One embodiment provides a negative active material for lithium secondary battery, comprising:
a first coke with a Total Fibrosity Index (TFI) of 0.70 to 0.85 and a second coke with a Total Fibrosity Index (TFI) of 0.01 to 0.60 at a weight ratio of 4:1 to 50:1, and
wherein, a lithium secondary battery containing the negative active material has an average voltage value of -0.16 V or more at the 40% of SOC (State of Charge), based on the entire battery charge capacity of 100%.

The weight ratio of the first coke and the second coke may be 9:1.

The first coke may be in primary particle form or secondary particle form.

If the first coke is in the form of secondary particles, the pitch binder in the first coke may be included from 1 % to 30% for 100 wt% of the first coke.

The second coke may be in the form of primary particles.

The diameter D50 of the first coke or second coke may be 5 µm to 20 µm.

The ratio of D90 particle diameter/D10 particle diameter (D90/D10) of the first coke or second coke may be 5 or less.

The tap density of the first coke or second coke may be 0.50 g/cc to 1.50 g/cc.

The specific surface area (BET) of the first coke or second coke can be 0.5 m²/g to 2.0 m²/g.

The first coke or second coke may contain a coating material selected from soft carbon, hard carbon, or a mixture thereof.

The coating material may be included at 0.1 to 10 wt% for 100 wt% of the first coke or second coke.

Another embodiment provides a negative active material manufacturing method for lithium secondary battery, comprising:
manufacturing a first coke and a second coke in the form of primary particles by using carbon raw materials; producing a first coke with a Total Fibrosity Index of 0.70 to 0.85 and a second coke with a Total Fibrosity Index of 0.01 to 0.60 by graphitizing the first coke and the second coke; and manufacturing a negative active material by mixing the first coke and the second coke at a weight ratio of 4:1 to 50:1; wherein, a lithium secondary battery containing the negative active material has an average voltage value of -0.16 V or more at the 40% of SOC (State of Charge), based on the entire battery charge capacity of 100%.

The carbon raw material may be any of a coal-based needle calcinated coke, a needle green coke, an isotropic coke or a combination thereof.

In one embodiment, the first coke in the form of the primary particles can be manufactured, and a first coke in the form of secondary particles can be manufactured by mixing the first coke in the form of the primary particles with a binder.

The binder may be a pitch binder.

In one embodiment, the first coke in the form of primary particles and second coke, and the first coke in the form of secondary particles may be coated with a coating material selected from soft carbon, hard carbon, or a mixture thereof.

The coating material may be included at 0.1 to 10 wt% for 100 wt% of the first coke or second coke.

In one embodiment, the step of manufacturing first coke and second coke in the form of primary particles using the carbon raw material and then carbonizing the first coke and second coke before graphitizing may be further included.

Another embodiment provides a lithium secondary battery containing: a positive electrode; a negative electrode including a negative active material for a lithium secondary battery according to an embodiment of the present invention described above; and an electrolyte.

According to one embodiment, a negative active material is provided in which a first coke with a Total Fibrosity Index of 0.70 to 0.85 and a second coke with a Total Fibrosity Index of 0.01 to 0.60 are mixed at a specific weight ratio. A lithium secondary battery containing a negative electrode containing the negative active material has excellent charge and discharge characteristics, and its rate characteristic is particularly excellent as the average voltage value is over -0.16V when the SOC (State of Charge) is 40%.

### DETAILED DESCRIPTION OF THE EMBODIMENTS

The advantages and features of the present invention, and methods for achieving them, will become clear by referring to the exemplary embodiments described in detail below along with the accompanying drawings. However, the present invention is not limited to the exemplary embodiments disclosed below and may be implemented in various different forms. These embodiments are merely provided to ensure that the disclosure of the present invention is complete and to fully inform those skilled in the art of the present invention of the scope of the invention. The invention is defined only by the scope of the claims. The same reference numerals refer to the same components throughout the specification.

Accordingly, in some exemplary embodiments, well-known techniques are not specifically described to avoid ambiguous interpretation of the present invention. Unless otherwise defined, all terms (including technical and scientific terms) used in this specification may be used with a meaning that can be commonly understood by a person of an ordinary skill in the technical field to which the present invention belongs. In addition, unless explicitly described to the contrary, the word "comprise, contain, have, include", and variations such as "comprises" or "comprising", will be understood to imply the inclusion of stated elements but not the exclusion of any other elements. The singular also includes the plural, unless specifically stated in the phrase.

In this specification, D10, D50, and D90 particle diameter refers to the particle size when particles of various particle sizes are accumulated to 10%, 50%, and 90%, respectively, by volume ratio.

### A negative active material for a lithium secondary battery

One embodiment provides a negative active material for a lithium secondary battery comprising a first coke with a Total Fibrosity Index of 0.70 to 0.85 and a second coke with a Total Fibrosity Index of 0.01 to 0.60 in a weight ratio of 4:1 to 50:1.

The lithium secondary battery containing the negative active material showed excellent rate characteristics of over -0.05V at SOC 10%, over -0.12V at SOC 20%, and over -0.15V at SOC 30%. It exhibits excellent rate characteristics above -0.16V at SOC 40%, particularly.

In this specification, the Total Fibrosity Index (TFI) is used as an optical structure quantification index and is measured as follows (see International Journal of Coal Geology 139 2015 184-190 and ASTM D5061-07).

A piece of coke measuring approximately 10 × 10 × 10 mm is fixed in a mold of a certain size, and then solidified by adding epoxy resin and curing agent to create a cylinder-shaped specimen with a diameter of 30 mm and a height of 25 mm. At this time, the size of the coke piece and the final specimen is not limited to the figures and can be freely changed by an ordinary technician according to common sense in the technology. After confirming that the specimen has completely hardened, remove it from the mold and polish the observation surface of the specimen smooth. Observe the specimen with a polarizing microscope at 500x magnification to obtain a structure image measuring 1280 mm × 950 mm.

Continuous areas with the same color on the image are defined as one domain, and the size and area of each domain are measured. The measured domain size is classified into structure (tissue) types through the relationship between width (W) and length (L) versus width (W), as shown in Table 1 below, and a fiber index (Wi) is assigned according to the type..

**[Table 1]**

| structure (tissue) types | Domain size | | a fiber index (Wi) |
|---|---|---|---|
| | Width (W, µm) | Relationship of Length (L) vs width (W) | |
| Isotropic | 0.0 | - | 0.00 |
| Incipient | 0.5 | L=W | 0.13 |
| Circular fine | 0.5-1.0 | L=W | 0.19 |
| Circular medium | 1.0-1.5 | L=W | 0.24 |
| Circular coarse | 1.5-2.0 | L<W | 0.43 |
| Lenticular fine | 1.0-3.0 | L≥2W, L<4W | 0.61 |
| Lenticular medium | 3.0-8.0 | L>2W, L<4W | 0.63 |
| Lenticular coarse | 8.0-12.0 | L>2W, L≤4W | 0.64 |
| Ribbon fine | 2.0-12.0 | L>4W | 0.65 |
| Ribbon medium | 12.0-25.0 | L>4W | 0.77 |
| Ribbon coarse | 25.0 ± | L>4W | 0.85 |

In the case of area, the area of the relevant domain is divided by the area of the entire image to obtain a fraction (Xi). And then the area fraction of all domains visible on the image are measured and recorded.

The Total Fibrosity Index (TFI) value can be obtained by multiplying the fiber index (Wi) and the area fraction (Xi) of each domain and adding the values of the entire domain, as shown in the equation below.
TFI = ΣXᵢWᵢ
TFI: Total Fibrosity Index
Wi: Fiber index by domain, minimum = 0, maximum = 0.85
Xi: Area fraction by domain, ΣXi=1

The first coke has a Total Fibrosity Index of 0.70 to 0.85, and the charge and discharge characteristics of negative active materials including it in the range are excellent.

The first coke may include a green coke, an isotropic coke, a pitch coke or combinations thereof.

The "green coke (raw coke)" generally refers to manufacturing pitch, which is a coal or petroleum-based residue or processed product, through a coking reaction under high pressure and high temperature conditions. Specifically, it can be classified into the following types depending on the composition of the raw materials and coking process conditions. *Anisotropic or needle coke with high carbon orientation in the uniaxial direction; or*

### Isotropic or pitch coke with low carbon orientation

More specifically, "green" refers to a state obtained immediately after the coking process that has not been subjected to heat treatment such as calcination or carbonization and contains a certain percentage of volatilized components.

The negative active material of one embodiment of the present invention may include a mixture of the first coke and the second coke with a total fiber index of 0.01 to 0.60 at a weight ratio of 4:1 to 50:1. This can maximize the improvement of the charge and discharge characteristics and rate characteristics of the lithium secondary battery.

The weight ratio of the first coke and the second coke is 4:1 to 50:1, 4:1 to 20:1, 4:1 to 10:1, 4:1 to 9:1, 5:1 to 10:1 , 5:1 to 9:1, 9:1 to 50:1, 9:1 to 30:1 or 9:1 to 20:1, and in one embodiment, the weight ratio may be 9:1.

The first coke may be in primary particle form or secondary particle form.

In this specification, "primary particle" is in the form of a crystalline particle (crystallite particle) or grain. A plurality of primary particles forms grain boundaries and can agglomerate together to form secondary particles. "Secondary particle" includes plurality of primary particles. Additionally, secondary particles refer to particles that are not aggregates of other types of particles, or particles that are no longer agglomerated.

If the first coke is in the form of secondary particles, the pitch binder in the first coke may be included from 1% to 30% for 100 wt% of the first coke.

Specifically, the pitch binder within the first coke is 1 wt% to 20 wt%, 1 wt% to 15 wt%, 5 wt% to 20wt%, or 5 wt% to 15 wt% for the first coke 100 wt%. In one embodiment, the pitch coke may be included at 13 wt% based on 100 wt% of the first coke.

In the wt% range, improvements in charge and discharge characteristics and rate characteristics of lithium secondary batteries can be maximized.

The second coke may be in the form of primary particles.

The diameter D50 of the first coke or second coke may be 5 µm to 20 µm, and specifically, the diameter D50 of the first coke and second coke may be 5 µm or more, 8 µm or more, 10 µm or more, and 15 µm or more, or 20 µm or less, 15 µm or less, and 12 µm or less.

Specifically, when the diameter D50 of the graphite is less than 5 µm, the number of primary particles participating in the secondary particles is so few that the randomized orientation between particles within the electrode layer is not sufficient, resulting that an electrode expansion rate may increase due to repeated charge and discharge reactions. Additionally, there may be a problem of decreased battery efficiency due to an increase in the specific surface area of the negative active material or a decrease in tab density and electrode density.

On the other hand, if it exceeds 20 µm, the tab density becomes excessively low and it is difficult to form a flat electrode surface even after rolling. In addition, problems such as difficulty in implementing appropriate electrode density also occur. In other words, it is difficult to form a secondary battery electrode that exhibits excellent battery performance.

In one embodiment, the ratio of D90 particle diameter/D10 particle diameter (D90/D10) of the first coke or second coke may be 5 or less.

If the D90/D10 value exceeds 5, there may be a problem in which it is not easy to control the rheological properties of the slurry for electrode coating due to the maximization of the powder content.

The tap density of the first coke or second coke may be 0.50 g/cc to 1.50 g/cc, for example, the tap density may be 0.80 g/cc to 1.20 g/cc or 1.00 g/cc to 1.20 g/cc.

The specific surface area (BET) of the first coke or second coke can be 0.5 m²/g to 2.0 m²/g, for example, the specific surface area is 0.8 m²/g to 1.8 m²/g, 1.0 m²/g to 1.7 m²/g, or 1.2 m²/g to 1.4 m²/g.

The negative active material of one embodiment has a specific surface area and tap density in the range, and may have excellent battery characteristics when applied to a lithium secondary battery.

The first coke or second coke can have a high degree of graphitization due to increased crystallinity of carbon. Specifically, d₀₀₂, which represents the spacing of crystal planes in XRD analysis, may be 3.354 to 3.365 Å, and specifically, 3.357 to 3.365 Å. Additionally, in XRD analysis, the lattice constant L_{c} may be 200 to 1,000 Å, specifically 400 to 800 Å. Additionally, in XRD analysis, the lattice constant Lₐ may be 700 to 2,000 Å, specifically 900 to 2,000 Å. With d₀₀₂, L_{c} and Lₐ values in the range, the first coke or second coke can exhibit a high degree of graphitization.

The first coke or second coke may contain a coating material selected from soft carbon, hard carbon, or a mixture thereof. The coating material covers the graphite, improving the stability of the coke and further improving battery characteristics. In one embodiment, the coating material may be petroleum-based pitch.

The softening point of the coating material may be above 200°C, above 210°C, above 220°C, above 230°C, above 240°C, or above 250°C.

The coating material may be included at 0.1 to 10 wt% for 100 wt% of the first coke or second coke.

The particle diameter D50 of the first coke or second coke containing the coating material may be 10 µm to 20 µm, and specifically, the particle diameter is 10 µm or more, and 15 µm or more, or 20 µm or less, and 15 µm or below.

The tap density of the first coke or second coke containing the coating material may be 0.80 g/cc to 1.50 g/cc.

The specific surface area (BET) of the first coke or second coke containing the coating material may be 0.5 m²/g to 2.5 m²/g, for example, the specific surface area may be 1.0 m²/g to 2.0 m²/g, or 1.0 m²/g to 1.5 m²/g.

The first coke or second coke containing the coating material can have a high degree of graphitization due to increased crystallinity of carbon. Specifically, d₀₀₂, which represents the spacing of crystal planes in XRD analysis, may be 3.360 to 3.365 Å. Additionally, in XRD analysis, the lattice constant L_{c} may be 400 to 1,000 Å, specifically 500 to 800 Å. Additionally, in XRD analysis, the lattice constant La may be 800 to 2,000 Å, specifically 1,000 to 2,000 Å. With d₀₀₂, L_{c} and Lₐ values in the range, the first or second coke containing the coating material can exhibit a high degree of graphitization.

### A manufacturing method of negative active material for lithium secondary battery

Another embodiment provides a negative active material manufacturing method for lithium secondary battery, comprising:
manufacturing a first coke and a second coke in the form of primary particles by using carbon raw materials; producing a first coke with a Total Fibrosity Index of 0.70 to 0.85 and a second coke with a Total Fibrosity Index of 0.01 to 0.60 by graphitizing the first coke and the second coke; and manufacturing a negative active material by mixing the first coke and the second coke at a weight ratio of 4:1 to 50:1; wherein, a lithium secondary battery containing the negative active material has an average voltage value of -0.16 V or more at the 40% of SOC (State of Charge), based on the entire battery charge capacity of 100%.

The carbon raw material may be any of a coal-based needle calcinated coke, a needle green coke, an isotropic coke or a combination thereof.

The calcinated coke refers to a heat treatment product that removes volatilized components through calcination or carbonization of a green coke.

Specifically, the carbon raw material used in the production of the first coke may be any of a coal-based needle calcinated coke, a needle green coke, or a combination thereof, and the carbon raw material used in the production of the second coke may be an isotropic coke.

The first coke may be needle green coke.

When manufacturing first coke and second coke in the form of primary particles using the carbon raw material, the carbon raw material can be pulverized.

First, in the step of pulverizing the carbon raw materials, the pulverizer can be a jet-mill, roller mill, or a general continuous or batch type pulverizer that can perform pulverization and simultaneous air classification, but is not limited to this.

In one embodiment, a first coke in the form of secondary particles can be manufactured by mixing the manufactured first coke in the form of primary particles with a binder.

Specifically, a first coke in the form of secondary particles can be manufactured by mixing the first coke in the form of primary particles with a binder and utilizing shear force through a hot kneading process. At this time, the binder may be a pitch binder.

The pitch may be a coal-based material, such as coal tar, or a petroleum-based material.

Additionally, the softening point of the binder can be 80 to 300°C.

If the softening point is less than 80°C, the binding force is low, making it difficult to smoothly bond between primary particles and form secondary particles, and the carbonization yield is low, making it difficult to implement an economical manufacturing process. On the other hand, if the softening point exceeds 300°C, the operating temperature of the equipment for fusion of binder material increases. This increases equipment manufacturing costs. In addition, the use of high temperatures may cause problems with thermal denaturation and carbonization of some samples.

The wt% of the binder may be 1% to 30% for 100 wt% of the first coke in the form of the primary particle. In one embodiment, the wt% of the binder may be 5 wt% to 15 wt% based on 100 wt% of the first coke in the form of the primary particle.

Specifically, if it is less than 1 wt%, the binding effect may be small and smooth secondary particle formation may not be achieved, and the binding force between primary particles within secondary particles may be reduced, which may cause problems of easy micronation during powder processing processes such as grinding.

On the other hand, if it exceeds 30 wt%, the content of graphite derived from the binder is relatively high, which may reduce the capacity of the first graphite particle. In addition, the specific surface area increases due to the high pore content generated during thermal decomposition, which may reduce battery efficiency.

Specifically, the step of manufacturing the first coke in the form of the secondary particle can be performed for 1 hour to 5 hours after mixing the first coke in the form of the primary particle and the pitch binder and reaching a predetermined temperature.

If the reaction is carried out for less than 1 hour, uniform mixing of the pitch binder and primary particles may be difficult, and if it is carried out for more than 5 hours, denaturation (oxidation and heat denaturation) of the pitch binder occurs due to excessive overheating, resulting a problem that the battery characteristic decreases. The step of manufacturing secondary particles by mixing primary particles and binder can be performed above the softening point of the binder. In one embodiment, mixing to produce secondary particles can be performed by placing primary particles and pitch binder at room temperature in equipment that can mix them into a high-viscosity paste-type mixture at high temperature. At this time, the chamber can be maintained above 30°C compared to the softening point of the pitch binder. As a result, the pitch binder is sufficiently softened to have fluidity and smooth and uniform mixing can be achieved.

In one embodiment, the first coke in the form of primary particles, the coke in the form of secondary particles, or the second coke in the form of primary particles may be coated with a coating material selected from soft carbon, hard carbon, or a mixture thereof. The coating material is coated on the graphite, improving the stability of the graphite and further improving battery characteristics. In one embodiment, the coating material may be petroleum-based pitch.

The softening point of the coating material may be above 200°C, above 210°C, above 220°C, above 230°C, above 240°C, or above 250°C.

The coating material may be included at 0.1 to 10 wt% for 100 wt% of the first coke or second coke.

Afterwards, the first coke and second coke are graphitized to produce a first coke with a Total Fibrosity Index of 0.70 to 0.85 and a second coke with a Total Fibrosity Index of 0.01 to 0.60.

Specifically, graphitization can be carried out at a temperature of 2,800 to 3,200°C for 1 hour to 3 hours, and at this time, the temperature can be raised at the same speed to maintain the structure in the carbonization stage, but this is not limited. no.

Additionally, the graphitization step can be performed in an inert atmosphere. Specifically, it may be performed in a nitrogen, argon, or helium gas atmosphere, but is not limited thereto.

Afterwards, the first coke and second coke are mixed at a weight ratio of 4:1 to 50:1 to produce negative active material. The manufactured negative active material has the same characteristics as the negative active material for lithium secondary batteries described above, and improves the charge and discharge characteristics and rate characteristics of the battery.

In the present exemplary embodiment, a carbonization step may be further included, if necessary.

Specifically, after manufacturing first coke and second coke in the form of primary particles using the carbon raw material, the first coke and second coke can be carbonized before graphitization. Alternatively, the step of carbonizing the first coke in the form of the secondary particle and the second coke in the form of the primary particle may be further included.

The carbonization can be carried out, for example, in a non-oxidative atmosphere and in the 800 to 1 ,500°C range for 1 to 3 hours.

At this time, the temperature increase speed to the temperature can be 5 to 20°C/min, and structural changes can be minimized by slowly increasing the temperature at the speed.

In another embodiment of the present invention, a lithium secondary battery is provided, including a positive electrode, a negative electrode, and an electrolyte, where the negative electrode includes a negative active material manufactured by the method described above.

The characteristics of the negative active material and the resulting lithium secondary battery are as described above. Additionally, except for the negative active material, the remaining battery configuration is generally known. Therefore, detailed description will be omitted.

### DETAILED DESCRIPTION OF THE EMBODIMENTS

Hereinafter, it will be described in detail through exemplary embodiments. However, the exemplary embodiment below merely exemplifies the present invention, and the content of the present invention is not limited by the exemplary embodiment below.

### Exemplary embodiment 1

### (1) Manufacturing of negative active material

As carbon raw materials, green coke (VM content about 5.0 wt%) which are premium coal-based needle coke products, and isotropic coke were used to produce first coke and second coke in the form of primary particles, and the particle diameter D50 of the first particle was 9.2 µm each. and 11.5 µm.

13 wt% of pitch, which has a softening point of 120°C, was mixed with 100 wt% of the first coke in the manufactured primary particle form. Afterwards, first coke in the form of secondary particles was produced by mixing for 2 hours using a heatable mixing mixer. At this time, the particle diameter D50 of the secondary particle was 13.2µm.

Afterwards, the manufactured first coke in the form of secondary particles and the second coke in the form of primary particles were coated with 13 wt% of soft carbon, heated to 3,000°C, and graphitized for 1 hour to produce a first coke with a Total Fibrosity Index of 0.70 to 0.85 and a second coke with a Total Fibrosity Index of 0.01 to 0.60.

Afterwards, the needle coke in the form of secondary particles and the isotropic coke in the form of primary particles were mixed at a weight ratio of 97:3 to obtain negative active material.

### (2) Manufacturing of lithium secondary batteries

A negative active material slurry was prepared by mixing 95.6 wt% of the negative active material prepared in the (1), 1.1 wt% of carboxymethylcellulose, 2.3 wt% of styrene butadiene rubber, and 1 wt% of Super P conductive material in distilled water solvent.

The negative active material slurry was applied to the copper (Cu) current collector, dried at 80°C for 10 minutes, and compressed in a roll press. Afterwards, a negative electrode was prepared by vacuum-drying in a 120°C vacuum oven for 12 hours. After vacuum-drying, the electrode density of the negative electrode was set to 1.55 g/cc.

Lithium metal was used as the counter electrode, and as the electrolyte solution, a solution that 1 mole of LiPF₆ dissolved in a mixed solvent with a volume ratio of 1:1 ethylene carbonate (EC):dimethyl carbonate (DMC) was used.

Using each component, a half-cell of the 2032 coin cell type was manufactured according to a typical manufacturing method.

### Exemplary embodiment 2

A half-cell was manufactured using the same method as exemplary embodiment 1, except that first coke in the form of secondary particles and first coke in the form of primary particles were mixed at a weight ratio of 95:5.

### Exemplary embodiment 3

A half-cell was manufactured using the same method as exemplary embodiment 1, except that first coke in the form of secondary particles and second coke in the form of primary particles were mixed at a weight ratio of 90:10.

### Exemplary embodiment 4

A half-cell was manufactured using the same method as exemplary embodiment 1, except that first coke in the form of secondary particles and second coke in the form of primary particles were mixed at a weight ratio of 85:15.

### Exemplary embodiment 5

Half-cell was produced using the same method as exemplary embodiment 1, except that first coke in the form of primary particles and second coke in the form of primary particles, rather than first coke in the form of secondary particles, were mixed at a weight ratio of 95:5.

### Exemplary embodiment 6

A half-cell was manufactured using the same method as exemplary embodiment 5, except that first coke in the form of primary particles and second coke in the form of primary particles were mixed at a weight ratio of 90:10.

### Exemplary embodiment 7

A half-cell was manufactured using the same method as exemplary embodiment 5, except that first coke in the form of primary particles and second coke in the form of primary particles were mixed at a weight ratio of 85:15.

### Comparative Example 1

A half-cell was manufactured using the same method as exemplary embodiment 1, except that second coke was not used.

### Comparative Example 2

A half-cell was manufactured using the same method as exemplary embodiment 5, except that second coke was not used.

### Comparative Example 3

A half-cell was manufactured using the same method as exemplary embodiment 1, except that first coke was not used.

### Experimental Example 1: Graphite degree analysis of negative active material

To evaluate the degree of graphitization of the artificial graphite negative electrode materials manufactured in Exemplary Embodiment 3 and Comparative Examples 1 and 3, the results of X-ray diffraction (XRD) analysis are shown in the following Table 2.

XRD analysis was performed under the following conditions.
slit condition: Divergence Silt, Scattering Slit 0.5°, Receiving Slit 0.15mm
X-ray wavelength: 1.541838 Å (Cu Kαm)
scan condition: 0.02 step, 1°/min

**[Table 2]**

| | d(002) | L_{c} | Lₐ | the degree of graphitization | Lₐ/L_{c} |
|---|---|---|---|---|---|
| Example 3 | 3.3611 | 637 | 1851 | 0.917 | 2.9 |
| C-example 1 | 3.3614 | 634 | 1787 | 0.914 | 2.8 |
| C-example 3 | 3.3645 | 526 | 769 | 0.878 | 1.5 |

In the Table 2, d₀₀₂ represents the spacing of crystal planes in XRD analysis, and L_{c} and Lₐ represent lattice constants in XRD analysis. At this time, the smaller d₀₀₂ and the larger the L_{c} and Lₐ values, the greater the degree of graphitization.

As can be seen in the Table 2, the negative active material of exemplary embodiment 3 had a higher degree of graphitization compared to Comparative Examples 1 and 3.

### Experimental Example 2: Measurement of initial discharge capacity and efficiency of lithium secondary battery (Half-cell)

Previously, the active materials finally obtained in Exemplary Examples 1 to 7 and Comparative Examples 1 to 3 were tested by applying them to half-cells.

Specifically, the battery was operated under 0.1 C, 5mV, 0.005C cut-off charge, and 0.1C 1.5V cut-off discharge conditions, and the initial discharge capacity and initial efficiency values were recorded in Table 3.

**[Table 3]**

| | Discharge capacity (mAh/g) | Efficiency (%) |
|---|---|---|
| Example 1 | 352.6 | 92.7 |
| Example 2 | 346.8 | 92.1 |
| Example 3 | 346.9 | 91.9 |
| Example 4 | 346.3 | 91.7 |
| Example 5 | 351 | 93.4 |
| Example 6 | 350.4 | 92.5 |
| Example 7 | 350 | 92.4 |
| C-Example 1 | 346.7 | 92.2 |
| C-Example 2 | 352.0 | 93.2 |
| C-Example 3 | 324.1 | 92.7 |

As can be seen in the Table 3, the battery of the exemplary embodiment has excellent charge and discharge characteristics and efficiency.

### Experimental Example 3: Measurement of voltage value at predetermined SOC (%) of lithium secondary battery (Half-cell)

The active material finally obtained in exemplary embodiment 3 was tested by applying it to half-cell.

After charging the SOC (State of Charge) to 10, 20, 30, and 40% in 4^{th} cycle, the average voltage value was measured using ETH-HC0105R equipment. (When charging and discharging the battery at 3.0V to 4.5V, when the entire battery charge capacity is set to 100%, the battery is charged to 10, 20, 30, and 40% charge capacity, respectively)

The results are shown in the following Table 4.

**[Table 4]**

| SOC (%) | average voltage value | Example and C-Example | #1 | #2 | #3 | #4 | #5 |
|---|---|---|---|---|---|---|---|
| 10 | -0.040 | Example 3 (the first coke in secondary particle form and second coke, 9:1 weight ratio) | -0.049 | -0.033 | -0.033 | -0.044 | -0.041 |
| 20 | -0.101 | Example 3 (First coke and second coke in secondary particle form, 9:1 weight ratio) | -0.113 | -0.092 | -0.093 | -0.105 | -0.101 |
| 30 | -0.135 | Example 3 (First coke and second coke in secondary particle form, 9:1 weight ratio) | -0.144 | -0.127 | -0.130 | -0.140 | -0.133 |
| 40 | -0.154 | Example 3 (First coke and second coke in secondary particle form, 9:1 weight ratio) | -0.158 | -0.150 | -0.158 | -0.152 | -0.152 |

As can be seen in the Table 4, the half-cell containing the negative active material of exemplary embodiment 3 has excellent rates of over -0.05V at SOC 10%, over -0.12V at SOC 20%, and over -0.15V at SOC 30%. It exhibited an excellent rate characteristic of over -0.16V, particularly at SOC 40%.

The exemplary embodiments described above should be understood in all respects as illustrative and not limiting. The scope of the present invention is indicated by the claims described below rather than the detailed description above, and all changes or modified forms derived from the meaning and scope of the claims and their equivalent concepts should be construed as being included in the scope of the present invention.

## Claims

1. A negative active material for lithium secondary battery, comprising:
a first coke with a Total Fibrosity Index (TFI) of 0.70 to 0.85 and a second coke with a Total Fibrosity Index (TFI) of 0.01 to 0.60 at a weight ratio of 4:1 to 50:1, and
wherein, a lithium secondary battery containing the negative active material has an average voltage value of -0.16 V or more at the 40% of SOC (State of Charge), based on the entire battery charge capacity of 100%.

2. The negative active material of claim 1, wherein:
the first coke and the second coke is included with a weight ratio of 9:1.

3. The negative active material of claim 1, wherein:
the first coke is in the form of primary particles or secondary particles.

4. The negative active material of claim 3, wherein:
when the first coke is in the form of secondary particles, a pitch binder in the first coke is included from 1% to 30% for 100 wt% of the first coke.

5. The negative active material of claim 1, wherein:
the second coke is in the form of primary particles.

6. The negative active material of claim 1, wherein:
a diameter D50 of the first coke or the second coke is 5 µm to 20 µm.

7. The negative active material of claim 1, wherein:
a ratio of D90 particle diameter/D10 particle diameter (D90/D10) of the first coke or the second coke is 5 or less.

8. The negative active material of claim 1, wherein:
a tap density of the first coke or the second coke is 0.50 g/cc to 1.50 g/cc.

9. The negative active material of claim 1, wherein:
a specific surface area (BET) of the first coke or the second coke is 0.5 m²/g to 2.0 m²/g.

10. The negative active material of claim 1, wherein:
the first coke or the second coke further includes a coating material selected from soft carbon, hard carbon, or mixture thereof.

11. The negative active material of claim 10, wherein:
the coating material is included in 0.1 wt% to 10 wt% for 100 wt% of the first coke or the second coke.

12. A negative active material manufacturing method for lithium secondary battery, comprising:
manufacturing a first coke and a second coke in the form of primary particles by using carbon raw materials;
producing a first coke with a Total Fibrosity Index of 0.70 to 0.85 and a second coke with a Total Fibrosity Index of 0.01 to 0.60 by graphitizing the first coke and the second coke; and
manufacturing a negative active material by mixing the first coke and the second coke at a weight ratio of 4:1 to 50:1;
wherein, a lithium secondary battery containing the negative active material has an average voltage value of -0.16 V or more at the 40% of SOC (State of Charge), based on the entire battery charge capacity of 100%.

13. The method of claim 12, wherein:
the carbon raw material is any of coal-based needle calcinated coke, a needle green coke, an isotropic coke or a combination thereof.

14. The method of claim 12, further comprises:
producing a first coke in the form of secondary particles by manufacturing the first coke in the form of primary particles and mixing the first coke in the form of primary particles with a binder.

15. The method of claim 14, wherein:
the binder is a pitch binder.

16. The method of claim 14, further comprises:
coating the first coke in the form of primary particles and the second coke, and the first coke in the form of secondary particles with a coating material selected from soft carbon, hard carbon, or a mixture thereof.

17. The method of claim 16, wherein:
the coating material is included at 0.1 wt% to 10 wt% for 100 wt% of the first coke or the second coke.

18. The method of claim 12, wherein:
after manufacturing the first coke and second coke in the form of primary particles using the carbon raw material, it further includes the step of carbonizing the first coke and second coke before graphitizing.

19. The method of claim 14, further comprises:
the step of carbonizing the first coke in the form of secondary particles and the second coke in the form of the primary particle.

20. A lithium secondary battery, comprising:
a positive electrode;
a negative electrode containing a negative active material for a lithium secondary battery according to any one of claim 1 to claim 11; and
an electrolyte.
